# EUROPÄISCHE PATENTSCHRIFT

(11) **EP 0 744 853 B1**
(45) Veröffentlichungstag und Bekanntmachung des Hinweises auf die Patenterteilung: **10.01.2007**
(21) Anmeldenummer: 96201378.5
(22) Anmeldetag: 21.05.1996
(51) Int. Cl.: H04M 1/00, H04M 3/54, H04Q 3/00

(54) **Kommunikationssystem**
Communication system
Système de communication

(30) Priorität: 26.05.1995 DE 19519402
(43) Veröffentlichungstag der Anmeldung: 27.11.1996
(73) Patentinhaber: Philips Intellectual Property & Standards GmbH, 20099 Hamburg (DE); Koninklijke Philips Electronics N.V., 5621 BA Eindhoven (NL)
(72) Erfinder: Maass, Henning, Dipl.-Ing., 22335 Hamburg (DE); Stahl, Martin, Dipl.-Ing., 22335 Hamburg (DE); Falck, Thomas, Dipl.-Inform., 22335 Hamburg (DE); Schreyer, Oliver, Dipl.-Math., 22335 Hamburg (DE)
(74) Vertreter: Volmer, Georg

(56) Entgegenhaltungen:
- JP-A- 2 260 851
- JP-A- 5 316 033
- JP-A- 7 038 957
- US-A- 4 899 373
- US-A- 5 012 466
- US-A- 5 392 340
- SODERBERG L: "EVOLVING AN INTELLIGENT ARCHITECTURE FOR PERSONAL TELECOMMUNICATION" , ON - ERICSSON REVIEW, ERICSSON. STOCKHOLM, SE, VOL. 70, NR. 4, PAGE(S) 156-171 XP000415352 ISSN: 0014-0171 * das ganze Dokument *
- GIORDANO A ET AL: "PCS NUMBER PORTABILITY" , IEEE INTERNATIONAL SYMPOSIUM ON PERSONAL, INDOOR AND MOBILE RADIO COMMUNICATIONS, XX, XX, PAGE(S) 1146-1150 XP002037912 * das ganze Dokument *
- MOULY; PAUTET: 'The GSM System for Mobile Communications', 1992, CELL AND SYS, PARIS

## Beschreibung

Die Erfindung betrifft ein Kommunikationssystem mit Teilnehmerendgeräten, die über mindestens eine Vermittlungsvorrichtung miteinander koppelbar und denen jeweils mehrere Rufnummern, für die zugehörige Telekommunikationsparameter definierbar sind, zuordenbar sind.

Ein solches Kommunikationssystem ist beispielsweise eine Nebenstellenanlage. Auch mehrere Nebenstellenanlagen können ein solches Kommunikationssystem bilden. Die Erfindung ist ebenfalls auf öffentliche Vermittlungssystme anwendbar.

Ein derartiges Kommunikationssystem wird z.B in US 5,392,340 offenbart.

In ISDN-Systemen ("Integrated Services Digital Network") gibt es die Möglichkeit, einem Teilnehmeranschluß, und damit einem Teilnehmerendgerät, mehrere Rufnummern von Teilnehmern zuzuordnen. Wechselt ein Teilnehmer seinen Standort, kann er in der zugehörigen Vermittlungsvorrichtung eine Rufumleitung aktivieren, so daß seine Rufnummer einem anderen Teilnehmeranschluß zugeordnet wird und Rufe an sein eigenes Teilnehmerendgerät zu einem anderen Teilnehmerendgerät umgeleitet werden. Weiterhin kann ein Teilnehmer für seinen eigenen Teilnehmeranschluß Telekommunikationsparameter definieren, z.B. ein Kurz- bzw. Zielwahlnummernverzeichnis, ein persönliches Telefonnummernverzeichnis, eine persönliche Funktionstastenbelegung, Anrufstatistik oder auch persönliche Gebührenabrechnungsparameter. Die Telekommunikatonsparameter eines Teilnehmers sind dessen Teilnehmeranschluß zugeordnet und in der Vermittlungsvorrichtung abgespeichert.

Der Erfindung liegt die Aufgabe zugrunde, beim Kommunikationssystem der eingangs genannten Art die Teilnehmermobilität zu verbessern.

Die Aufgabe wird dadurch gelöst, daß eine Speicherung der Telekommunikationsparameter in Speichermitteln der Teilnehmerendgeräte vorgesehen ist und daß bei einem Zuordnungswechsel einer Teilnehmerrufnummer von einem ersten Teilnehmerendgerät zu einem zweiten Teilnehmerendgerät eine Übertragung der zu dieser Teilnehmerrufnummer gehörenden Telekommunikationsparameter zum zweiten Teilnehmerendgerät vorgesehen ist.

Für jeden berechtigten Benutzer des Kommunikationssystems sind Telekommunikationsparameter definierbar, die dem Benutzer insbesondere die Telekommunikation mit anderen Benutzern des Kommunikationssystems erleichtern sollen und die gegebenenfalls auch Verwaltungsvorgänge bestimmen, z.B. eine spezielle Gebührenabrechnung für den jeweiligen Benutzer. Auch eine Einschränkung der Kommunikationsmöglichkeiten eines Benutzers mit anderen Teilnehmern des Telekommunikationssystems ist mit Hilfe der Telekommunikationsparameter möglich. Der Zuordnungswechsel der Teilnehmerrufnummer eines Teilnehmers vom ersten zum zweiten Teilnehmerendgerät erfolgt, wenn der Teilnehmer anstelle des ersten Teilnehmerendgeräts das zweite Teilnehmerendgerät benutzen will und sich dort als aktueller Benutzer registriert. Gemäß der Erfindung kann diesem Teilnehmer auch vom zweiten Teilnehmerendgerät aus sein kompletter Satz an Telekommunikationsparametern zur Verfügung gestellt werden. An diesen Teilnehmer gerichtete Rufe werden zum zweiten Teilnehmerendgerät umgeleitet. Die zur Erhöhung der Teilnehmermobilität erforderlichen technischen Änderungen des Kommunikationssystems werden auf die Teilnehmerendgeräte konzentriert. Die Vermittlungsvorrichtung kann unverändert bleiben. Die dezentralisierte Architektur des Kommunikationssystems in bezug auf die Kommunikation eines Teilnehmers mit persönlichen Telekommunikationsparametern erhöht die Zuverlässigkeit des Kommunikationssystems und macht dieses leicht für weitere Teilnehmer erweiterbar. So sind auch die Speichermittel zur Speicherung der Telekommunikationsparameter in den Teilnehmerendgeräten angeordnet.

In einer Ausgestaltung der Erfindung ist ein drittes Teilnehmerendgerät vorgesehen, das Speichermittel zur fortwährenden Speicherung der zu dieser Teilnehmerrufnummer gehörenden Telekommunikationsparameter enthält und von dem aus bei dem Zuordnungswechsel der Teilnehmerrufnummer eine Übertragung der Telekommunikationsparameter erfolgt, um die Telekommunikationsparameter im zweiten Teilnehmerendgerät zu speichern.

Bei dieser Ausgestaltung ist nach der Übertragung der Telekommunikationsparameter und dem Zuordnungswechsel der Teilnehmerrufnummer zum zweiten Teilnehmerendgerät gewährleistet, daß die Telekommunikationsparameter in zwei Teilnehmerendgeräten redundant gespeichert sind. Gegenüber dem Verlust von abgespeicherten Telekommunikationsparameterdaten besteht somit eine erhöhte Sicherheit. Indem das dritte Teilnehmerendgerät zur Speicherung der Telekommunikationsparameter aller Teilnehmer vorgesehen wird, läßt sich der erforderliche Speicherplatz im wesentlichen auf das dritte Teilnehmerendgerät konzentrieren (Server-Prinzip). Die redundante Speicherung von Telekommunikationsparametern kann auf diese Weise kostengünstig realisiert werden.

Die Erfindung wird weiterhin dadurch vorteilhaft ausgestaltet, daß bei dem Zuordnungswechsel der Teilnehmerrufnummer vom ersten zum zweiten Teilnehmerendgerät eine Übertragung der zu dieser Teilnehmerrufnummer gehörenden Telekommunikationsparameter vom ersten zum zweiten Teilnehmerendgerät vorgesehen ist, um die Telekommunikationsparameter im zweiten Teilnehmerendgerät zu speichern.

Dies hat den Vorteil, daß die Telekommunikationsparameter nicht mehr fortwährend in einem dafür vorgesehenen Teilnehmerendgerät gespeichert werden müssen. Die für eine solche fortwährende Speicherung von Telekommunikationsparametern vorgesehenen Speichermittel können eingespart werden.

In einer anderen Ausgestaltung der Erfindung ist für den Zuordnungswechsel der Teilnehmerrufnummer zum zweiten Teilnehmerendgerät und/oder für eine Änderung der zur Teilnehmerrufnummer gehörenden Telekommunikationsparameter eine Eingabe der Teilnehmerrufnummer und einer persönlichen Identifikationsnummer erforderlich.

Damit ein Zuordnungswechsel einer Teilnehmerrufnummer und/oder eine Änderung von persönlichen Telekommunikationsparametern nur durch einen berechtigten Teilnehmer erfolgen kann, muß vorher eine persönliche Identifikationsnummer, die jeweils nur dem berechtigten Teilnehmer bekannt gemacht wird, eingegeben werden. Die Eingabe der Teilnehmerrufnummer ist erforderlich, da einer solchen Nummer jeweils das Teilnehmerendgerät, wo der zugehörige Teilnehmer registriert ist und die entsprechenden Telekommunikationsparameter des jeweiligen Teilnehmers zugeordnet sind. Die Teilnehmerrufnummer dient als öffentlich zugängliche Kennummer des Teilnehmers.

Die Erfindung läßt sich auch dadurch ausgestalten, daß für eine Teilnehmerrufnummer eines Teilnehmers jeweils ein Teilnehmerendgerät vorgesehen ist, das zum Empfang von Rufen für den Teilnehmer dient und von dem aus gegebenenfalls diese Rufe an dasjenige Teilnehmerendgerät umgeleitet werden, dem momentan die Teilnehmerrufnummer des Teilnehmers zugeordnet ist.

Das zum Empfang von Rufen für den genannten Teilnehmer vorgesehene Teilnehmerendgerät empfängt zunächst alle Rufe für einen solchen Teilnehmer und leitet diese Rufe gegebenenfalls über die Vermittlungsvorrichtung an dasjenige Teilnehmerendgerät weiter, wo sich der Teilnehmer gerade registriert hat. Will der Teilnehmer wegen des Wechsels seines Standortes ein anderes Teilnehmerendgerät benutzen, muß nur im zum Empfang von Rufen für diesen Teilnehmer dienenden Teilnehmerendgerät die Zuordnung der Teilnehmerrufnummer angepaßt werden.

Weiterhin ist zur Ausgestaltung der Erfindung zusätzlich zu den jeweiligen Teilnehmerrufnummern jedem Teilnehmerendgerät eine feste Teilnehmerendgeräterufnummer zugeordnet.

Mit der festen Teilnehmerendgeräterufnummer läßt sich auf einfache Weise unabhängig von den Teilnehmerrufnummern ein Teilnehmerendgerät adressieren. Auf einfache Weise kann damit eine Rufumleitung oder auch eine Übertragung von Telekommunikationsparametern zwischen den Teilnehmerendgeräten realisiert werden.

Das erfindungsgemäße Kommunikationssystem wird weiterhin dadurch ausgestaltet, daß in jedem Teilnehmerendgerät Speichermittel zur Speicherung von Telekommunikationsparametern für eine eingeschränkte Kommunikation eines beliebigen Teilnehmers vorgesehen sind.

Solche vorgebbaren und nicht auf einen bestimmten Teilnehmer bezogenen Telekommunikationsparameter sollen jedem beliebigen Teilnehmer an jedem beliebigen Teilnehmerendgerät des Kommunikationssystems zur Verfügung stehen. Die Berechtigung zur Benutzung dieser Telekommunikationsparameter wird nicht überprüft. Beispielsweise kann beim Betrieb einer Nebenstellenanlage die Kommunikation auf einen Informationsaustausch innerhalb der Nebenstellenanlage eingeschränkt werden.

Ausführungsbeispiele der Erfindung werden nachstehend anhand der Zeichnungen näher erläutert.

Es zeigen:
- Fig. 1: ein erfindungsgemäßes Kommunikationssystem mit mehreren Teilnehmerendgeräten,
- Fig. 2: ein Blockschaltbild für ein Teilnehmerendgerät des Kommunikationssystems,
- Fig. 3: ein Ablaufdiagramm für eine Registrierung bei einem Teilnehmerendgerät und
- Fig. 4: ein Ablaufdiagramm für einen Ruf an einen mobilen Benutzer.

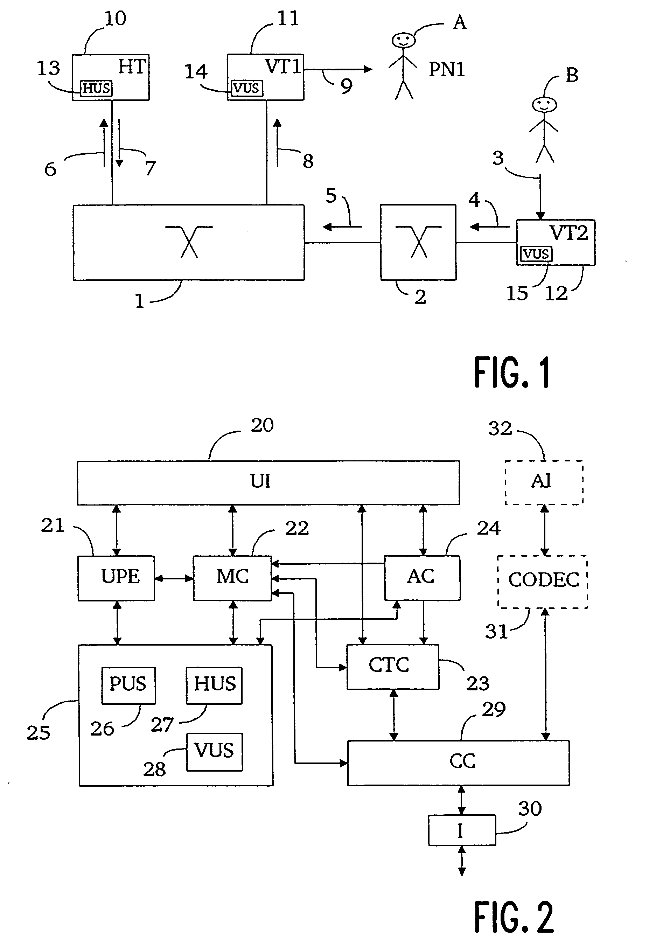

Das in Fig. 1 dargestellte Kommunikationssystem enthält eine erste Vermittlungsvorrichtung 1 und eine zweite Vermittlungsvorrichtung 2. Die Vermittlungsvorrichtungen können sowohl private Nebenstellenanlagen als auch eine öffentliche Vermittlungsvorrichtung darstellen. Im vorliegenden Fall ist die erste Vermittlungsvorrichtung 1 eine ISDN-TK-Anlage (Nebenstellenanlage). Die zweite Vermittlungsvorrichtung 2 ist eine öffentliche Vermittlungsvorrichtung, die über das öffentliche Fernsprechnetz mit der ersten Vermittlungsvorrichtung 1 gekoppelt ist. An die erste Vermittlungsvorrichtung 1 sind ein Teilnehmerendgerät 10 (HT, "Home Terminal") und ein Teilnehmerendgerät 11 (VT1, "Visited Terminal") angeschlossen. Ein Teilnehmerendgerät 12 (VT2) ist an die zweite Vermittlungsvorrichtung 2 gekoppelt. Auf die Darstellung weiterer möglicher Vermittlungsvorrichtungen bzw. weiterer an die Vermittlungsvorrichtungen koppelbarer Teilnehmerendgeräte wurde aus Gründen der Übersichtlichkeit verzichtet. Am Ort des Teilnehmerendgeräts 12 befindet sich der Teilnehmer B. Der Teilnehmer A ist ein mobiler Teilnehmer, der z.B. das Teilnehmerendgerät 11 nur zeitweise so nutzt, daß er von diesem aus Kommunikationsvorgänge initiiert und über dieses Gerät erreichbar ist. Dem Teilnehmer A sind eine Teilnehmerrufnummer PN1 und Telekommunikationsparameter zugeordnet. Die Telekommunikationsparameter für einen Teilnehmer sind variabel. Beispiele für Telekommunikationsparameter sind ein Kurz- bzw. Zielwahlnummernverzeichnis, ein persönliches Telefonnummernverzeichnis, eine persönliche Funktionstastenbelegung, eine Anrufstatistik oder auch persönliche Gebührenabrechnungsparameter. Mit Hilfe der Telekommunikationsparameter kann auch die Berechtigung zum Kommunizieren, insbesondere Telefonieren, mit einem anderen Teilnehmer eingeschränkt werden. So kann z.B. eine Kommunikation ins Ausland ausgeschlossen werden. Die Telekommunikationsparameter des Teilnehmers A sind in einem Speicher 13 (HUS, "Home User Store") des Teilnehmerendgeräts 10 dauerhaft gespeichert.

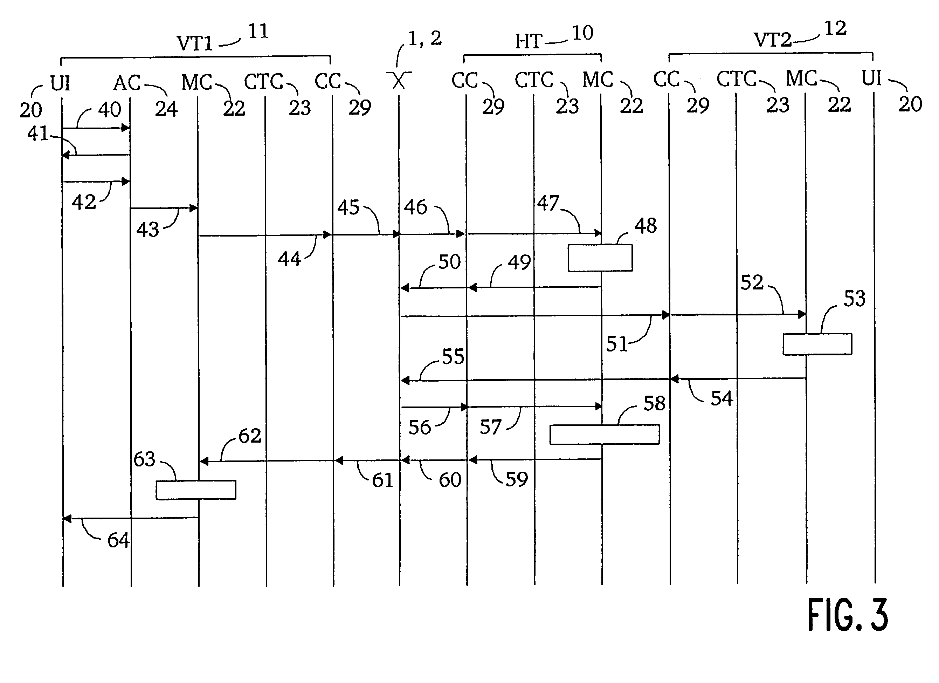

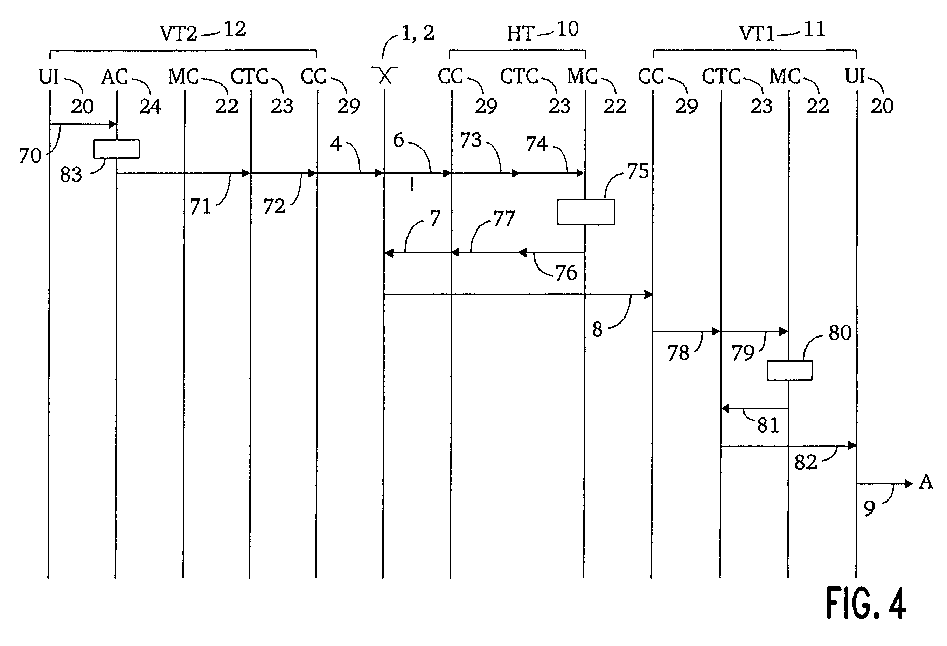

Solange der Teilnehmer A als Benutzer z.B. des Teilnehmerendgeräts 11 registriert ist, sind dessen Telekommunikationsparameter im Speicherbereich 14 (VUS, "Visited User Store") des Teilnehmerendgerätes 11 abgelegt. Die Registrierung des Teilnehmers A im Teilnehmerendgerät 11 ist als Dateninformation im Speicher 13 des Teilnehmerendgeräts 10 gespeichert. Die Registrierung des Teilnehmers A beim Teilnehmerendgerät 11 wird später anhand Fig. 3 näher erläutert. Die Pfeile 3 bis 9 dienen zur Verdeutlichung der Abläufe, die bei einem Ruf des Teilnehmers B an den Teilnehmer A nach einer solchen Registrierung ausgeführt werden. Diese Abläufe werden später mit Hilfe von Fig. 4 beschrieben.

Fig. 2 zeigt ein Blockschaltbild, das den Aufbau der Teilnehmerendgeräte 10, 11 und 12 darstellt, die insbesondere ISDN-Telefone sind. Ein solches Teilnehmerendgerät enthält eine Benutzerschnittstelle 20 (UI, "User Interface"), über die ein Teilnehmer (Benutzer) am Ort dieses Teilnehmerendgerätes mit dem Gerät kommunizieren kann. So kann der Teilnehmer beispielsweise über ein Bedienfeld Daten, wie eine Telefonnummer oder eine Kurzwahlnummer, eingeben oder über ein Anzeigeelement Informationen über einen Kommunikationsvorgang ablesen. Weitherhin kann ein Teilnehmer sich über die Schnittstelle 20 als aktueller Benutzer beim Teilnehmerendgerät registrieren. Die Benutzerschnittstelle 20 ist zum Austausch von Daten mit Funktionsblöcken 21, 22, 23 und 24 gekoppelt. Der Funktionsblock 21 ist ein Benutzerprofil-Editor (UPE, "User Profile Editor"), mit dem das Benutzerprofil eines Teilnehmers, d.h. die Telekommunikationsparameter des Teilnehmers, geändert werden. Dazu ist der Funktionsblock 21 mit einer Speichereinheit 25 gekoppelt, die Speicherbereiche 26, 27 und 28 aufweist. Im Speicherbereich 26 werden Telekommunikationsparameter abgelegt, die ein vereinfachtes Benutzerprofil darstellen und die von jedem beliebigen Benutzer verwendet werden können. Der Speicherbereich 26 ist mit PUS ("Plain User Store") bezeichnet. Der Speicherbereich 27 dient zur dauerhaften Speicherung von Telekommunikationsparametern von Teilnehmern, denen Rufe prinzipiell über dieses Teilnehmerendgerät zugeführt werden. Deren Teilnehmerrufnummern und deren persönliche Identifikationsnummern sind ebenfalls hier abgelegt. Falls die entsprechenden Teilnehmer bei einem anderen Teilnehmerendgerät als Benutzer registriert sind, ist die Teilnehmerendgeräterufnummer des anderen Teilnehmerendgeräts ebenfalls in diesem Speicherbereich 27 abgelegt. Die im Speicherbereich 27 gespeicherten Telekommunikationsparameter werden nicht gelöscht, wenn sich ein entsprechender Teilnehmer bei einem anderen Teilnehmerendgerät als Benutzer registriert. Der Speicherbereich 27 ist mit HUS ("Home User Store") bezeichnet. Dagegen dient der Speicherbereich 28 zur Speicherung von Telekommunikationsparametern, die zu einem Teilnehmer gehören, der nur zeitweise bei diesem Teilnehmerendgerät als aktueller Benutzer registriert ist. Die Rufnummer und persönliche Identifikationsnummer eines solchen Teilnehmers ist im Speicherbereich 28 ebenfalls abgelegt. Nach einer Deregistrierung eines nur zeitweise bei diesem Teilnehmerendgerät registrierten Benutzers werden die zu diesem Teilnehmer gehörenden Telekommunikationsparameter gelöscht.

Die Funktionsblöcke 22, 23 und 24 stellen ebenso wie ein Funktionsblock 29 Steuereinheiten dar, die zur Steuerung der Funktionen des Teilnehmerendgeräts dienen und die beispielsweise durch Mikroprozessortechnik realisierbar sind. Die Steuereinheit 23 (CTC, "Conventional Terminal Controller") faßt die üblichen Steuerfunktionen eines Telekommunikationsendgeräts, hier insbesondere eines ISDN-Telefons zusammen. Die Steuereinheit 24 (AC, "Access Controller") überprüft bei einem Zugriff eines Benutzers über die Benutzerschnittstelle 20 auf das Teilnehmerendgerät die Zugangsberechtigung des Teilnehmers. Die Überprüfung eines Teilnehmers erfolgt anhand einer persönlichen Identifikationsnummer (PIN) des Teilnehmers, die dieser Teilnehmer über die Benutzerschnittstelle 20 einzugeben hat. Ist die Zugangsberechtigung eines Teilnehmers durch die Steuereinheit 24 festgestellt, wird diese Information an die Steuereinheiten 22 und 23 übertragen, die das Teilnehmerendgerät so steuern, daß die gewünschte Benutzung durch den Teilnehmer ermöglicht wird. Die Steuereinheit 22 (MC, "Mobility Controller") faßt die Steuerfunktionen zusammen, die zur Herstellung einer Benutzermobilität erforderlich sind. Die Steuereinheit 22 steuert sowohl den Zugriff auf die Speichereinheit 25 und die dort abgelegten Telekommunikationsparameter als auch die Funktionen des Teilnehmerendgeräts, die sicherstellen, daß bei diesem Teilnehmerendgerät registrierte Teilnehmer eine Kommunikation mit Hilfe dieses Teilnehmerendgeräts einleiten und durchführen können bzw. über dieses Teilnehmerendgerät erreichbar sind. Dazu ist die Steuereinheit 22 mit dem Funktionsblock 21, den Steuereinheiten 23 und 24 als auch mit einer Steuereinheit 29 gekoppelt. Die Steuereinheit 29 (CC, "Communication Controller") ist außerdem mit der Steuereinheit 23 und einer Schnittstelle 30 gekoppelt. Über die Schnittstelle 30 ist das Telekommunikationsendgerät mit einer Vermittlungsvorrichtung, wie beispielsweise den Vermittlungsvorrichtungen 1 oder 2 aus Fig. 1, gekoppelt. Die Steuereinheit 29 steuert den Zugriff der Steuereinheiten 22 und 23 auf die Schnittstelle 30. Außerdem werden durch die Steuereinheit 29 Steuersignale, die über die Schnittstelle 30 empfangen wurden, an die Steuereinheiten 22 und 23 verteilt. Bei der Ausführung als ISDN-Telefon werden von den Steuereinheiten 22 bzw. 23 erzeugte Steuersignale über die Steuereinheit 29 und die Schnittstelle 30 einem zur Verfügung stehenden D-Kanal zugeführt. Auch von der Steuereinheit 29 an die Steuereinheiten 22 und 23 zu verteilende Steuersignale stellen Steuersignale dar, die über einen D-Kanal empfangen wurden. Die Schnittstelle 30 ist in diesem Fall eine S₀-Schnittstelle.

Über einen Codierer-Decodierer (CODEC) 31, der sowohl mit der Steuereinheit 29 als auch mit einer Audio-Schnittstelle 32 (AI) gekoppelt ist, werden von einem Teilnehmer am Ort des Teilnehmerendgeräts erzeugte Sprachsignale in ein geeignetes Datensignal umgesetzt, das über die Schnittstelle 30 gesendet wird. Ebenso werden entsprechende empfangene Datensignale mit Hilfe des Codierers-Decodierers 31 und der Audio-Schnittstelle 32 in Sprachsignale für den das Teilnehmerendgerät benutzenden Teilnehmer umgesetzt. Beim ISDN-Telefon werden solche Sprachsignale über B-Kanäle übertragen.

In Fig. 3 sind die Abläufe bei einer Registrierung eines Teilnehmers am Beispiel der Registrierung des Teilnehmers A mit der Teilnehmerrufnummer PN1 am Teilnehmerendgerät 11 (VT1) dargestellt, wobei der Teilnehmer A vorher beim Teilnehmerendgerät 12 (VT2) als Benutzer registriert war. Nach der Registrierung am Teilnehmerendgerät 11 ist diesem neben möglichen weiteren Teilnehmerrufnummern von weiteren dort registrierten Teilnehmern dann auch die Teilnehmerrufnummer PN1 zugeordnet. Jedem Teilnehmerendgerät ist zusätzlich jeweils eine Teilnehmerendgeräterufnummer zugeordnet: dem Endgerät 10 seine Rufnummer TN0, dem Endgerät 11 seine Rufnummer TN1 und dem Endgerät 12 seine Rufnummer TN2. Der Aufbau der im vorliegenden Beispiel für die Registrierung maßgebenden Teilnehmerendgeräte 10, 11 und 12 entspricht dem Aufbau des in Fig. 2 dargestellten Teilnehmerendgeräts. Lediglich bezüglich der Speichereinheit 25 bestehen Unterschiede. So fehlt, um Speicherplatz zu sparen, im vorliegenden Ausführungsbeispiel in den Teilnehmerendgeräten 11 und 12 der Speicherbereich HUS, was allerdings nicht zwingend ist. Die Einsparung von Speichermitteln HUS ist bei dieser besonderen Konstellation des Kommunikationssystems möglich, da die Telekommunikationsparameter aller Teilnehmer im Speicherbereich HUS fest gespeichert sind und eine Übertragung von Telekommunikationsparametern bei einer Registrierung bei anderen Teilnehmerendgeräten (hier 11 und 12) immer vom Gerät 10 aus erfolgt.

Der Registrierungsvorgang durch den Teilnehmer A am Teilnehmerendgerät 11 wird eingeleitet durch die Erzeugung eines Registrierungssignals, daß im Schritt 40 über die Benutzerschnittstelle 20 an die Steuereinheit 24 übertragen wird. Das Registrierungssignal enthält die Teilnehmerrufnummer PN 1 des- Teilnehmers A, um diesen von anderen Teilnehmern zu unterscheiden. Daraufhin erfolgt eine Abfrage der zur Teilnehmerrufnummer PN1 des Teilnehmers A gehörenden persönlichen Identifikationsnummer (PIN), die nur berechtigten Personen bekannt ist. Dazu überträgt die Steuereinheit 24 im Schritt 41 ein entsprechendes Abfragesignal über die Benutzerschnittstelle 20 an den Teilnehmer A. Dieser überträgt die angeforderte persönliche Identifikationsnummer (PIN) im Schritt 42 über die Benutzerschnittstelle 20 an die Steuereinheit 24, die daraufhin im Schritt 43 ein Registrierungssignal generiert, das als Parameter die Teilnehmerrufnummer PN1 und die zugehörige persönliche Identifikationsnummer enthält und das an die Steuereinheit 22 übertragen wird. Die Steuereinheit 22 generiert nun ein sogenanntes Location-Update-Signal und überträgt dieses im Schritt 44 an die Steuereinheit 29, von wo aus es in den Schritten 45 und 46 über die Vermittlungsvorrichtungen 1 und 2 an das Teilnehmerendgerät 10 übertragen wird. Das Location-Update-Signal enthält als Parameter die Rufnummer TN1 des Teilnehmerendgeräts 11, die Teilnehmerrufnummer PN1 des Teilnehmers A und die persönliche Identifikationsnummer (PIN) des Teilnehmers A. Das Location-Update-Signal wird im Teilnehmerendgerät 10 von der Steuereinheit 29 empfangen und im Schritt 47 der dortigen Steuereinheit 22 zugeführt. Diese ermittelt anhand der in dem Speicherbereich HUS des Teilnehmerendgeräts 10 abgelegten Informationen, ob für die Teilnehmerrufnummer PN1 die korrekte persönliche Identifikationsnummer eingegeben wurde und außerdem die Rufnummer TN2 des Teilnehmerendgeräts 12, bei dem der Teilnehmer A unter der Teilnehmerrufnummer PN1 gerade registriert ist. Dieses ist im Schritt 48 zusammengefaßt.

In den Schritten 49, 50 und 51 wird nach Durchführung des Schrittes 48 ein Löschungssignal über die Steuereinheit 29 des Teilnehmerendgeräts 10 und die Vermittlungsvorrichtungen 1 und 2 an das Teilnehmerendgerät 12 übertragen. Das Löschungssignal enthält als Parameter die Teilnehmerrufnummer PN1 des Teilnehmers A. Es wird von der Steuereinheit 29 des Teilnehmerendgeräts 12 empfangen und dort im Schritt 52 an die dortige Steuereinheit 22 weitergeleitet. Diese Steuereinheit 22 löscht im Schritt 53 die Telekommunikationsparameter mit den Registrierungsdaten des Teilnehmers A, die unter der Teilnehmerrufnummer PN1 in der in Fig. 3 nicht dargestellten Speichereinheit 25 des Teilnehmerendgeräts 12 (genauer: im dortigen Speicherbereich VUS) abgelegt sind. Nach Löschung der Telekommunikationsparameter erzeugt die Steuereinheit 22 ein Löschungsbestätigungssignal, das als Parameter die Teilnehmerrufnummer PN1 des Teilnehmers A enthält und das in den Schritten 54, 55 und 56 über die Steuereinheit 29 des Teilnehmerendgeräts 12 und die Vermittlungsvorrichtungen 1 und 2 an die Steuereinheit 29 des Teilnehmerendgeräts 10 übertragen wird. Von dort aus wird in Schritt 57 dieses Löschungsbestätigungssignal der Steuereinheit 22 des Teilnehmerendgeräts 10 zugeführt. Diese speichert nun im Teilnehmerendgerät 10 (im Speicherbereich HUS) die Rufnummer TN1 des Teilnehmerendgeräts 11 als die Rufnummer desjenigen Teilnehmerendgeräts, wo der Teilnehmer A mit der Teilnehmerrufnummer PN1 derzeit als berechtigter Benutzer registriert ist (Schritt 58). Daraufhin werden die zur Teilnehmerrufnummer PN1 gehörenden Telekommunikationsparameter aus dem Speicherbereich HUS des Endgeräts 10 ausgelesen und in den Schritten 59, 60 und 61 zusammen mit einem Bestätigungssignal für die Registrierungsänderung bezüglich des Teilnehmers A bzw. dessen Teilnehmerrufnummer PN1 über die Steuereinheit 29 des Teilnehmerendgeräts 10 und die Vermittlungsvorrichtungen 1 und 2 an das Teilnehmerendgerät 11 übertragen. Dort wird das die Telekommunikationsparameter enthaltende Bestätigungssignal von der Steuereinheit 29 des Telekommunikationsendgeräts 11 empfangen und im Schritt 62 an die dortige Steuereinheit 22 weitergeleitet. Diese speichert die Telekommunikationsparameter mit Bezug auf die Teilnehmerrufnummer PN1 im dortigen Speicherbereich VUS der Speichereinheit 25 (Schritt 63).

Die damit durchgeführte Registrierung des Teilnehmers A mit der Teilnehmerrufnummer PN1 im Teilnehmerendgerät 11 wird im Schritt 64 durch ein von der Steuereinheit 22 erzeugtes und über die Benutzerschnittstelle 20 ausgegebenes Anzeigesignal auf einer Anzeigevorrichtung, z.B. einem Display, angezeigt. Der Teilnehmer A kann nun unter Ausnutzung seiner Telekommunikationsparameter vom Teilnehmerendgerät 11 aus eine Kommunikation zu anderen Teilnehmern tätigen. Außerdem werden Rufe für ihn an das Teilnehmerendgerät 11 weitergeleitet, was anhand von Fig. 4 näher beschrieben wird.

Im erfindungsgemäßen Kommunikationssystem ist auch eine Deregistrierung eines Teilnehmers ohne eine damit verbundene Registrierung des Teilnehmers möglich.

Ein solcher Deregistrierungsvorgang wird nicht mit einem Registrierungssignal wie im Schritt 40 von Fig. 3, sondern mit einem entsprechenden Deregistrierungssignal eingeleitet. Beim Deregistrierungsvorgang sind nur das Teilnehmerendgerät 10 und ein anderes Teilnehmerendgerät beteiligt. Die erforderlichen Schritte lassen sich aus den Ausführungen bezüglich Fig. 3 ableiten, indem die Schritte für die Deregistrierung des Teilnehmers A beim Teilnehmerendgerät 12 übernommen und die Schritte für die Registrierung beim Teilnehmerendgerät 11 ausgelassen werden. Eine solche reine Deregistrierung wird beispielsweise dann angewendet, wenn ein Teilnehmer für längere Zeit abwesend ist und währenddessen nicht als Benutzer des Kommunikationssystems auftritt. Soll ein Teilnehmer zeitlich unbeschränkt als Benutzer des Kommunikationssystems ausscheiden, ist eine erweiterte Deregistrierung vorgesehen, bei der eine Löschung der zu diesem Teilnehmer bzw. zu dessen Teilnehmerrufnummer gehörenden Telekommunikationsparameter in allen Teilnehmerendgeräten vorgesehen ist.

Anhand von Fig. 4 wird nun der schon in Fig. 1 grob dargestellte Vorgang näher erläutert, bei dem der Teilnehmer B vom Teilnehmerendgerät 12 aus einen Ruf an den Teilnehmer A absetzt, der beim Teilnehmerendgerät 11 als berechtigter Benutzer registriert ist. Dazu gibt der Teilnehmer B im Schritt 3 (s. Fig. 1) am Teilnehmerendgerät 12 die Teilnehmerrufnummer PN1 des Teilnehmers A ein, was dort zur Erzeugung eines Rufanforderungssignals durch die Benutzerschnittstelle 20 führt, das als Parameter die Teilnehmerrufnummer PN1 enthält. Das Rufanforderungssignal wird im Schritt 70 an die Steuereinheit 24 übertragen, die im Schritt 83 eine Auswertung der Telekommunikatonsparameter des Teilnehmers B, die im Speicher VUS des Teilnehmerendgeräts 12 abgelegt sind, derart vornimmt, daß eine Steuerung und/oder Einschränkung und/oder Erleichterung des Zugriffs durch den Teilnehmer B vorgenommen wird. Eine Steuerung kann beispielsweise durch eine Benutzerführung über eine Anzeigevorrichtung des Endgeräts 12 erfolgen. Eine Einschränkung des Zugriffs ist beispielsweise eine Beschränkung einer Kommunikation auf das Inland. Eine Erleichterung des Zugriffs wird beispielsweise durch ein auf den Teilnehmer B angepaßtes Kurzwahlverzeichnis realisiert. Wird der Zugriff von der Steuereinheit 24 als zulässig eingestuft, wird in den Schritten 71, 72 und 4 das Rufanforderungssignal von der Steuereinheit 24 über die Steuereinheiten 23 und 29 des Teilnehmerendgeräts 12 an die Vermittlungsvorrichtung 2 übertragen, die daraufhin ein Rufauslösesignal mit PN1 als Parameter generiert, das über die Vermittlungsvorrichtung 1 in Schritt 6 an das Teilnehmerendgerät 10 übertragen wird.

Dabei ist in dieser Ausführungsform die Auswahl des Teilnehmerendgeräts 10 als Zielgerät für die Übertragung des Rufauslösesignals unabhängig von der jeweiligen Teilnehmerrufnummer (hier: PN1). Kommen noch weitere Teilnehmerendgeräte als Zielgerät in Frage (hier nicht dargestellt), ist die jeweilige Teilnehmerrufnummer einem der als Zielgerät in Frage kommenden Teilnehmerendgeräte fest zugeordnet, z.B. in Anlehnung an die vorliegende Ausführungsform die Teilnehmerrufnummer PN1 dem Teilnehmerendgerät 10.

Das Rufauslösesignal wird über die Steuereinheit 29 des Teilnehmerendgeräts 10 in den Schritten 73 und 74 zunächst der Steuereinheit 23 und daraufhin der Steuereinheit 22 des Teilnehmerendgeräts 10 zugeführt. Diese überprüft im Schritt 75, bei welchem Teilnehmerendgerät der Teilnehmer A unter seiner Teilnehmerrufnummer PN1 als berechtigter Teilnehmer registriert ist. Dazu wird aus dem Speicherbereich HUS der Speichereinheit 25 des Telekommunikationsendgeräts 10 die zugehörige Rufnummer TN1 des Teilnehmerendgeräts 11 ausgelesen, bei dem zu diesem Zeitpunkt der Teilnehmer A als aktueller Benutzer registriert ist. Weiterhin wird überprüft, ob bezüglich der Teilnehmerrufnummer PN1 im Speicherbereich HUS des Teilnehmerendgeräts 10 Beschränkungen gespeichert sind, die zu einer Verhinderung der Weiterleitung des Rufs an das Teilnehmerendgerät 11 dienen. Beispielsweise kann an dieser Stelle mit Hilfe eines Telekommunikationsparameters des Teilnehmers A dessen Erreichbarkeit auf eine bestimmte Tageszeit eingeschränkt werden.

Wird in Schritt 75 kein solcher beschränkender Telekommunikationsparameter festgestellt, erzeugt die Steuereinheit 22 ein Rufumleitungssignal, das als Parameter die Rufnummer TN1 des Teilnehmerendgeräts 11 und die Teilnehmerrufnummer PN1 des Teilnehmers A enthält. Dieses Rufumleitungssignal wird in den Schritten 76, 77, 7 und 8 über die Steuereinheiten 23 und 29 des Teilnehmerendgeräts 10 sowie die Vermittlungsvorrichtungen 1 und 2 an das Teilnehmerendgerät 11 übertragen. Dort wird es über die Steuereinheit 29 und die Steuereinheit 23 an die Steuereinheit 22 des Teilnehmerendgeräts 11 geliefert, wo es im Schritt 80 auf mögliche weitere einschränkende Telekommunikationsparameter, die im Teilnehmerendgerät 11 gespeichert sind, überprüft wird. Erfolgt im Schritt 80 keine Zurückweisung des Rufumleitungssignals, signalisiert die Steuereinheit 22 in den Schritten 81, 82 und 9 über die Steuereinheit 23 und die Benutzerschnittstelle 20 einen Ruf an den Teilnehmer A. Die Signalisierung kann sowohl akustisch als auch optisch erfolgen.

Das Kommunikationssystem kann auch so ausgestaltet werden, daß keine feste Speicherung von Telekommunikationsparametern in einem der verwendeten Teilnehmerendgeräte vorgesehen ist, wie hier im Speicherbereich 13 (HUS) des Teilnehmerendgeräts 10. Erfolgt in diesem Fall ein durch eine Registrierung eines Teilnehmers ausgelöster Wechsel der Zuordnung einer Teilnehmerrufnummer vom ersten Teilnehmerendgerät, wo der Teilnehmer bis zu diesem Zeitpunkt registriert war, zu einem zweiten Teilnehmerendgerät, wo sich der Teilnehmer neu registriert, so werden die Telekommunikationsparameter des Teilnehmers vom ersten zum zweiten Teilnehmerendgerät mit Hilfe eines dritten Teilnehmerendgeräts (hier: das Teilnehmerendgerät 10 bzw. HT) übertragen und anschließend im ersten Teilnehmerendgerät gelöscht. Das dritte Teilnehmerendgerät dient bei dieser Ausführungsform nur zur Speicherung der Teilnehmerrufnummern und der zugehörigen Rufnummern der Teilnehmerendgeräte, bei denen die jeweiligen Teilnehmer zum betrachteten Zeitpunkt registriert sind. Auf eine redundante Speicherung der Telekommunikationsparameter wird damit verzichtet. Der Speicherbereich 13 (HUS) kann eingespart werden. Bei der Registrierung wird der Zuordnungswechsel der Teilnehmerrufnummer im dritten Teilnehmerendgerät 10 durch Änderung der zugehörigen Teilnehmerendgeräterufnummer vermerkt.

In einer anderen Ausführungsform ist der Speicherbereich 13 (HUS), in dem die Telekommunikationsparameter aller Benutzer dauerhaft gespeichert sind, auf mehrere Teilnehmerendgeräte verteilt. Diese Lösung ist vorteilhaft für Kommunikationssysteme, bei denen aufgrund einer sehr großen Anzahl Teilnehmer ein großer Speicherbedarf zur dauerhaften Speicherung der Telekommunikationsparameter der Teilnehmer besteht, wobei der erforderliche Speicher (HUS) nicht von einem einzigen Teilnehmerendgerät zur Verfügung gestellt werden kann. Außerdem kann das Umleiten von Rufen von mehreren Geräten parallel durchgeführt werden.

## Patentansprüche

1. Kommunikationssystem mit Teilnehmerendgeräten (10, 11, 12), die über mindestens eine Vermittlungsvorrichtung (1, 2) miteinander koppelbar und denen jeweils mehrere Rufnummern (TN0, TN1, TN2, PN1), für die zugehörige Telekommunikationsparameter definierbar sind, zuordenbar sind,
**dadurch gekennzeichnet,**
**daß** eine Speicherung der Telekommunikationsparameter in Speichermitteln (25) der Teilnehmerendgeräte vorgesehen ist und
**daß** bei einem Zuordnungswechsel einer Teilnehmerrufnummer (PN1) von einem ersten Teilnehmerendgerät (12) zu einem zweiten Teilnehmerendgerät (11) eine Übertragung der zu dieser Teilnehmerrufnummer (PN1) gehörenden Telekommunikationsparameter über wenigstens eine Vennitdungsvonichtung (1,2) zum zweiten Teilnehmerendgerät (11) vorgesehen ist.

2. Kommunikationssystem nach Anspruch 1,
**dadurch gekennzeichnet,**
**daß** für die Teilnehmerrufnummer (PN1) ein drittes Teilnehmerendgerät (10, HT) vorgesehen ist, das Speichermittel (13) zur fortwährenden Speicherung der zu der Teilnehmerrufnummer (PN1) gehörenden Telekommunikationsparameter enthält und von dem aus bei dem Zuordnungswechsel der Teilnehmerrufnummer (PN1) eine Übertragung der Telekommunikationsparameter zum zweiten Teilnehmerendgerät (11) erfolgt, um die Telekommunikationsparameter im zweiten Teilnehmerendgerät (11) zu speichern.

3. Kommunikationssystem nach Anspruch 1,
**dadurch gekennzeichnet,**
**daß** bei dem Zuordnungswechsel der Teilnehmerrufnummer (PN1) vom ersten (12) zum zweiten (11) Teilnehmerendgerät eine Übertragung der zu dieser Teilnehmerrufnummer (PN1) gehörenden Telekommunikationsparameter vom ersten zum zweiten Teilnehmerendgerät vorgesehen ist, um die Telekommunikationsparameter im zweiten Teilnehmendgerät (11) zu speichern.

4. Kommunikationssystem nach einem der Ansprüche 1 bis 3,
**dadurch gekennzeichnet,**
**daß** für den Zuordnungswechsel der Teilnehmerrufnummer (PN1) zum zweiten Teilnehmerendgerät und/oder für eine Änderung der zur Teilnehmerrufnummer gehörenden Telekommunikationsparameter eine Eingabe der Teilnehmerrufnummer (PN1) und einer persönlichen Identifikationsnummer (PIN) erforderlich ist.

5. Kommunikationssystem nach einem der Ansprüche 1 bis 4,
**dadurch gekennzeichnet,**
**daß** für eine Teilnehmerrufnummer (PN1) jeweils ein Teilnehmerendgerät (10, HT) vorgesehen ist, das zum Empfang von Rufen für den Teilnehmer dient und von dem aus gegebenenfalls diese Rufe an dasjenige Teilnehmerendgerät (11) umgeleitet werden, dem momentan die Teilnehmerrufnummer (PN1) des Teilnehmers (A) zugeordnet ist.

6. Kommunikationssystem nach einem der Ansprüche 1 bis 5,
**dadurch gekennzeichnet,**
**daß** zusätzlich zu den jeweiligen Teilnehmerrufnummern (PN1) jedem Teilnehmerendgerät (11) eine feste Teilnehmerendgeräterufnummer (TN1) zugeordnet ist.

7. Kommunikationssystem nach einem der Ansprüche 1 bis 6,
**dadurch gekennzeichnet,**
**daß** in jedem Teilnehmerendgerät (10, 11, 12) Speichermittel (PUS) zur Speicherung von Telekommunikationsparametern für eine eingeschränkte Kommunikation eines beliebigen Teilnehmers vorgesehen sind.

8. Kommunikationssystem nach einem der Ansprüche 1 bis 6,
**dadurch gekennzeichnet,**
**daß** das Endgerät Mittel (24) zur Steuerung und/oder Einschränkung und/oder Erleichterung eines Benutzerzugriffs durch Auswertung der Telekommunikationsparameter enthält.

9. Teilnehmerendgerät für ein Kommunikationssystem nach einem der Ansprüche 1 bis 8 mit Speichermitteln (25) zur Speicherung von zu mindestens einer Rufnummer gehörenden Telekommunikationsparametern und mit Steuermitteln (22) zur Steuerung zwischen Senden und Empfangen von zu einer bestimmten Rufnummer gehörenden Telekomrnunikationsparametern.

## Claims

1. Communication system with subscriber terminals (10, 11, 12) which can be coupled via at least one switch (1, 2), and to which subscriber terminals several call numbers (TN0, TN1, TN2, PN1) can be assigned for which associated telecommunication parameters are definable, **characterized in that** the telecommunication parameters are stored in storage means (25) of the subscriber terminals and **in that**, in the case the assignment of a subscriber call number (PN1) is changed from a first subscriber terminal (12) to a second subscriber terminal (11), the telecommunication parameters related to this subscriber call number (PN 1) are transmitted to the second subscriber terminal (11) via at least one switch (1, 2).

2. Communication system as claimed in Claim 1, **characterized in that** for the subscriber call number (PN1) a third subscriber terminal (10, HT) is provided which includes storage means (13) for continuously storing the telecommunication parameters related to this subscriber call number (PN1) and, when a change of the assignment of the subscriber call number (PN1) is made, the telecommunication parameters are transmitted from the third subscriber terminal to the second subscriber terminal (11) to store the telecommunication parameters in the second subscriber terminal (11).

3. Communication system as claimed in Claim 1, **characterized in that**, when an assignment of the subscriber call number (PN1) is changed from the first (12) to the second subscriber terminal (11), the telecommunication parameters related to this subscriber call number (PN1) are transmitted from the first to the second subscriber terminal to store the telecommunication parameters in the second subscriber terminal (11).

4. Communication system as claimed in any one of the Claims 1 to 3, **characterized in that** an entry of both the subscriber call number (PN1) and a personal identification number (PIN) is necessary for changing the assignment of the subscriber call number (PN1) to the second subscriber terminal and/or for changing the telecommunication parameters related to the subscriber call number.

5. Communication system as claimed in any one of the Claims 1 to 4, **characterized in that** one subscriber terminal (10, HT) is provided for each subscriber call number (PN1), which subscriber terminal is used for receiving calls for this subscriber and, if necessary, for diverting these calls from there to the subscriber terminal (11) to which the subscriber call number (PN1) of the subscriber (A) is currently assigned.

6. Communication system as claimed in any one of the Claims 1 to 5, **characterized in that** a fixed subscriber terminal call number (TN 1) is assigned to each subscriber terminal (11) in addition to the respective subscriber call numbers (PN1).

7. Communication system as claimed in any one of the Claims 1 to 6, **characterized in that** storage means (PUS) for storing telecommunication parameters relating to a subscriber's restricted communication are arranged in each subscriber terminal (10, 11, 12).

8. Communication system as claimed in any one of the Claims 1 to 6, **characterized in that** the subscriber terminal comprises means (24) for controlling and/or restricting and/or facilitating a user access by evaluating the telecommunication parameters.

9. Subscriber terminal for a communication system as claimed in any one of the Claims 1 to 8, comprising storage means (25) for storing telecommunication parameters belonging to at least one call number and comprising control means (22) for controlling the sending and receiving of telecommunication parameters belonging to a particular call number.

## Revendications

1. Système de communication avec des terminaux d'abonné (10, 11, 12) qui peuvent être couplés les uns aux autres par l'intermédiaire d'au moins un dispositif de commutation (1, 2) et auxquels sont affectés respectivement plusieurs numéros d'appel (TN0, TN1, TN2, PN1) pour lesquels des paramètres de télécommunication correspondants peuvent être définis,
**caractérisé en ce**
**qu'**un enregistrement des paramètres de télécommunication dans les moyens de mémoire (25) des terminaux d'abonné est prévu et
**qu'**en cas de changement d'affectation d'un numéro d'appel d'abonné (PN1) d'un premier terminal d'abonné (12) vers un deuxième terminal d'abonné (11), il est prévu une transmission des paramètres de télécommunication appartenant à ce numéro d'appel d'abonné (PN1) par l'intermédiaire d'un dispositif de commutation (1, 2) au moins vers le deuxième terminal d'abonné (11).

2. Système de communication selon la revendication 1,
**caractérisé en ce**
**qu'**un troisième terminal d'abonné (10, HT)) qui contient des moyens d'enregistrement (13) pour l'enregistrement continu des paramètres de télécommunication appartenant au numéro d'appel d'abonné (PN 1) est prévu pour le numéro d'appel d'abonné (PN1) et, à partir de celui-ci, une transmission des paramètres de télécommunication vers le deuxième terminal d'abonné (11) est effectuée lors du changement d'affectation du numéro d'appel d'abonné (PN1) pour enregistrer les paramètres de télécommunication dans le deuxième terminal d'abonné (11).

3. Système de communication selon la revendication 1 ,
**caractérisé en ce**
**qu'**en cas de changement d'affectation du numéro d'appel d'abonné (PN1) du premier terminal d'abonné (12) au deuxième (11), il est prévu une transmission des paramètres de télécommunication appartenant à ce numéro d'appel d'abonné (PN1) du premier terminal d'abonné au deuxième afin d'enregistrer les paramètres de télécommunication dans le deuxième terminal à d'abonné (11).

4. Système de communication selon l'une des revendications 1 à 3,
**caractérisé en ce**
**que**, pour le changement d'affectation du numéro d'appel d'abonné (PN1) vers le deuxième terminal d'abonné et/ou pour une modification des paramètres de télécommunication appartenant au numéro d'appel d'abonné, une introduction du numéro d'appel d'abonné (PN1) et d'un numéro d'identification personnel (PIN) est nécessaire.

5. Système de communication selon l'une des revendications 1 à 4,
**caractérisé en ce**
**qu'**il est respectivement prévu pour un numéro d'appel d'abonné (PN1) un terminal d'abonné (10, HT) qui sert à la réception d'appels pour l'abonné et duquel ces appels sont éventuellement déviés vers le terminal d'abonné (11) auquel est momentanément attribué le numéro d'appel d'abonné (PN1) de l'abonné (A).

6. Système de communication selon l'une des revendications 1 à 5,
**caractérisé en ce**
**qu'**un numéro d'appel de terminal d'abonné (TN1) fixe est attribué à chaque terminal d'abonné (11) en plus des numéros d'appel d'abonné respectifs (PN1).

7. Système de communication selon l'une des revendications 1 à 6,
**caractérisé en ce**
**que** des moyens d'enregistrement (PUS) sont prévus dans chaque terminal d'abonné (10, 11, 12) pour l'enregistrement de paramètres de télécommunication pour une communication limitée d'un abonné quelconque.

8. Système de communication selon l'une des revendications 1 à 6,
**caractérisé en ce**
**que** le terminal contient des moyens (24) pour la commande et/ou la limitation et/ou la simplification d'un accès de l'utilisateur par évaluation des paramètres de télécommunication.

9. Terminal d'abonné pour un système de communication selon l'une des revendications 1 à 8 avec des moyens d'enregistrement (25) pour l'enregistrement de paramètres de télécommunication appartenant à au moins un numéro d'appel et avec des moyens de commande (22) pour la commande entre la transmission et la réception de paramètres de télécommunication appartenant à un numéro d'appel déterminé.
